# EUROPÄISCHE PATENTANMELDUNG

(11) **EP 4 570 766 A1**
(43) Veröffentlichungstag der Anmeldung: **18.06.2025**
(21) Anmeldenummer: 24218428.1
(22) Anmeldetag: 09.12.2024
(51) Int. Cl.: C03B 33/023, C03B 33/03, C03B 33/033, C03B 33/037

(54) **BRECHANLAGE FÜR FLOATGLAS UND VERFAHREN ZUM BRECHEN VON FLOATGLAS**

(30) Priorität: 15.12.2023 EP 23217119
(71) Anmelder: LISEC Austria GmbH, 3353 Seitenstetten (AT)
(72) Erfinder: MARAT, Daniel, 3353 Seitenstetten (AT); KOESSL, Bernhard, 3353 Seitenstetten (AT)
(74) Vertreter: Wunderlich & Heim Patentanwälte PartG mbB

(57) **Zusammenfassung**

Eine Brechanlage (1) für Floatglas, umfassend eine erste Brechstation (3) mit mindestens einer ersten Brecheinrichtung (3a) zum Brechen des Floatglases (2) entlang einer zuvor auf das Floatglas (2) aufgebrachten Ritzlinie in einer ersten Richtung (X), um eine Travere (2a) des Floatglases (2) abzutrennen, eine zweite Brechstation (4) mit mindestens einer zweiten Brecheinrichtung (4a,4b) zum Brechen der Travere (2a) entlang einer zuvor auf das Floatglas (2) aufgebrachten Ritzlinie in einer zweiten Richtung (Y), die senkrecht zu der ersten Richtung (X) ist, und eine Transporteinrichtung zum Transportieren des Floatglases (2), der Travere (2a) und von Abschnitten derselben durch die Brechanlage (1) in einer vorzugweise horizontalen Arbeitsebene in einer ersten linearen Transportrichtung (T1). Die zweite Brechstation (4) ist in der ersten Transportrichtung (T1) stromab der ersten Brechstation (3) angeordnet und ausgestaltet, um das Brechen der Travere (2a) mittels der mindestens einen zweiten Brecheinrichtung (4a,4b) ohne eine Drehung der Travere (2a) relativ zu der ersten Transportrichtung (T1) auszuführen. Vorzugsweise ist die mindestens eine erste Brecheinrichtung (3a) und in jedem Fall die mindestens eine zweite Brecheinrichtung (4a,4b) in Bezug auf die Transportrichtung des Floatglases oder der Travere (2a) feststehend. Die mindestens eine erste Brecheinrichtung (3a) und/oder die mindestens eine zweite Brecheinrichtung (4a,4b) weisen jeweils längliche Brechschiene oder Brechleiste (11) und einen länglichen Gegenhalter (12) auf.

## Beschreibung

Die Erfindung betrifft eine Brechanlage für Floatglas und ein Verfahren zum Brechen von Floatglas. Die Erfindung betrifft auch eine mit der Brechanlage ausgestattete Anlage zum Schneiden von Floatglas sowie ein das Brechverfahren nutzendes Verfahren zum Schneiden von Floatglas.

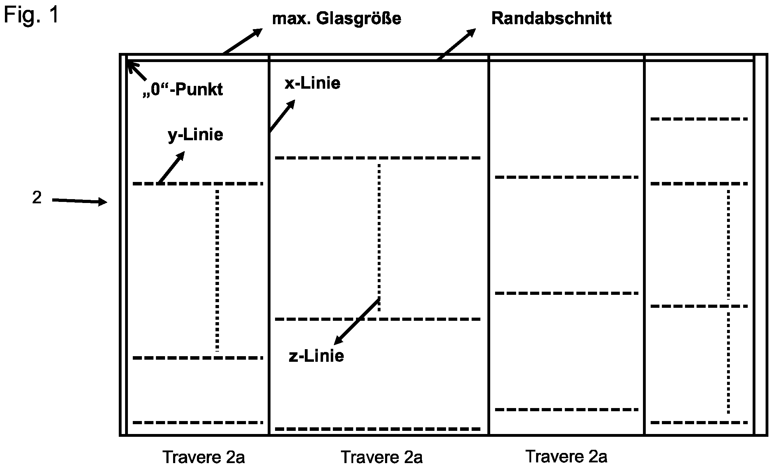

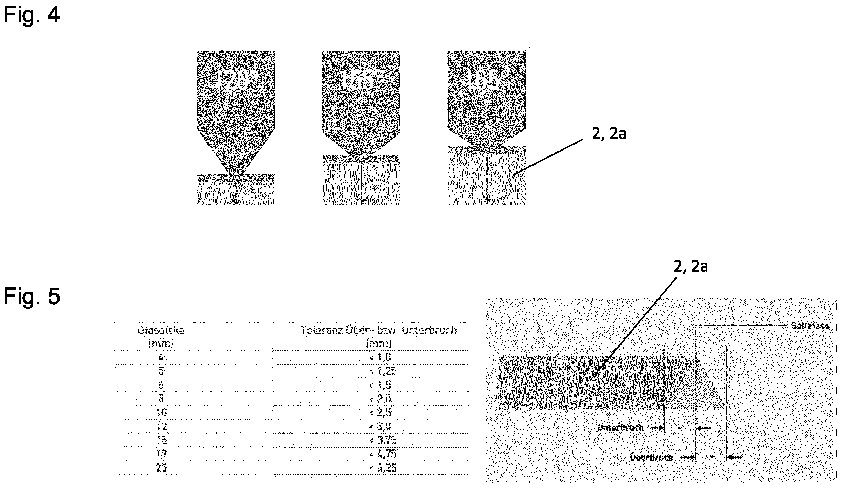

Floatglas ist Flachglas, welches in einem endloskontinuierlichen Prozess (sog. "Floatprozess" oder "Floatglasverfahren") hergestellt wird. Zuschnitte des Floatglases werden typischerweise hergestellt, indem eine größere Floatglas-Rohplatte, die beispielsweise eine Länge bis zu 6m und mehr in einer Längsabmessung und eine Dicke von 2-25mm haben kann, zunächst entlang einer oder mehrerer Linien geritzt wird. Das Ritzen erfolgt beispielsweise mit einem kleinen scheibenförmigen Schneidrad mit einem Durchmesser von beispielsweise 5mm und einer Dicke von 1mm, dessen radialer Außenumfang beidseitig zur Bildung eines Schneidwinkels von beispielsweise 120°, 135°, 155° oder 165° abgeschrägt ist und das mit einem bestimmten Anpressdruck gegen die Glasoberfläche gedrückt und durch Relativbewegung darauf abgerollt wird (siehe Fig. 4, die einen schematischen Vergleich von 3 Schneidrädern mit unterschiedlichen Schneidradwinkeln in einer Teil-Querschnittdarstellung zeigt). Durch das Ritzen werden - wie in Fig. 4 mit einem Pfeil angedeutet - im Glas Spannungen erzeugt, so dass das Glas anschließend entlang der/den Ritzlinie(n) durch mechanische Verformung (Biegung) gebrochen werden kann. Dabei werden von der größeren Floatglas-Rohplatte in einem ersten Schritt typischerweise Querstreifen abgeteilt, die als "Traveren" bezeichnet werden und aus denen durch weitere Unterteilung Abschnitte bzw. Einzelscheiben hergestellt werden. Die Fig. 1 zeigt beispielhaft eine solche größere Floatglas-Rohplatte, die an Nullschnittritzlinien im Bereich von zwei zu einer Ecke bzw. einem "Nullpunkt" zusammenlaufenden Rändern der Rohplatte sowie an X-Linien (zur Bildung der Traveren), an Y-Linien (zur Unterteilung der Traveren in Abschnitte), und an Z-Linien (zur weiteren Unterteilung der Abschnitte) vorab geritzt und anschließend gebrochen wird. Am Außenumfang werden optional an geeigneten Schritten im Prozess Randstreifen bzw. Randanschnitte oder Reste abgetrennt, um "saubere" Endkanten der fertigen, zuvor am Außenbereich der Floatglas-Rohplatte liegenden Abschnitte zu erhalten.

Der Begriff "Schneiden" umfasst im Folgenden das Ritzen und das Brechen, also das vollständige Abtrennen von Teilabschnitten und kann ggf. auch das Durchtrennen von weiteren Lagen, Schichten oder Folien aus Kunststoff bei Verbundglaslaminaten durch geeignete zusätzliche Trenneinrichtungen wie Laser, Schneidmesser etc. umfassen. Die Begriffe "Floatglas", "Travere" und "Abschnitte" bzw. "Zuschnitte" sind im Rahmen der vorliegenden Offenbarung deshalb auch so zu verstehen, dass sie nicht nur Floatglas im engeren Sinne, sondern auch aus Floatglas und ggf. weiteren Lagen, Schichten oder Folien hergestellte mehrschichtige Verbundglaslaminate umfassen.

Aus der WO 96/22948 A1 ist eine Schneideanlage und ein Schneideverfahren bekannt, bei denen Glastafeln entsprechend den zu erzeugenden Zuschnitten geritzt und dann in Zuschnitte gebrochen werden, während sie im Wesentlichen vertikal stehend ausgerichtet sind. Eine hierfür offenbarte Vorrichtung weist eine Station zum Ritzen der Glastafeln mit einer im Wesentlichen vertikal ausgerichteten Stützfläche und einem Förderer am unteren Rand derselben auf. Im Anschluss an die Station zum Ritzen ist eine erste und zweite Brechstation, in denen nacheinander die X-Traveren an X-Ritzlinien geöffnet und vordere Randabschnitte abgetrennt werden, vorgesehen. Die so erhaltenen Teile von Glastafeln werden in einer Wendestation um eine zur Stützfläche senkrechte Achse um 90° gewendet. In einer weiteren Brechstation werden die Y-Ritzlinien gebrochen. Die so erhaltenen Zuschnitte können, nachdem allenfalls vorhandene Randstreifen und Reststücke abgetrennt worden sind, unmittelbar in eine Vorrichtung zum Zwischenlagern von Zuschnitten eingeschoben oder einer Isolierglaslinie zugeführt werden.

### Die in der WO 96/22948 A1 beschriebenen

Brechvorrichtungen mit einem/einer von einer der Ritzlinie gegenüberliegenden Seite an die Glastafel anlegbaren länglichen Widerlager oder Brechleiste und mit von der gegenüberliegenden Seite an die Glastafel anlegbaren Gegenhaltern, deren Abstand von dem Widerlager beim Ausführen des Brechens verkleinerbar ist, um die Glastafel an der Ritzlinie mechanisch zu verformen und den Bruch einzuleiten, sind beispielsweise auch bei der Erfindung als Brechvorrichtung anwendbar und werden daher im Rahmen der Offenbarung nicht im Detail beschrieben.

Aus der EP 0 564 758 B1 ist ein Verfahren und eine Vorrichtung zum Zerteilen von Glastafeln in Zuschnitte bekannt. Das Verfahren umfasst zunächst den Schritt des Ritzens der Glastafeln, wobei abgesehen von den die jeweiligen Zuschnitte definierenden Ritzlinien wenigstens zwei zueinander senkrecht stehende Nullschnittritzlinien im Bereich von wenigstens zwei zu einer Ecke zusammenlaufenden Rändern der Glastafel erzeugt werden. Sodann wird die so geritzte Glastafel auf einen Brechtisch gefördert und ein Randstreifen entlang der quer zur Förderrichtung laufenden Nullschnittlinie abgebrochen, worauf die Glastafel entlang der quer zur Förderrichtung laufenden Ritzlinien (X-Schnitte) in Glasstreifen bzw. Traveren gebrochen wird. Gegebenenfalls werden die einzelnen so erhaltenen Traveren zu einem weiteren Abschnitt des Brechtisches bewegt und dort an parallel zur Förderrichtung ausgerichteten Ritzlinien (Y-Schnitte) weiter unterteilt und ein Randstreifen entlang der parallel zur Förderrichtung verlaufenden Nullschnittlinie abgebrochen. Jedes der Werkzeuge zum Abtrennen der Randstreifen besitzt ein von unten her im Bereich der Ritzlinie an die Glastafel bzw. den Glasstreifen anlegbares Widerlager und zwei von oben her an die Glastafel bzw. den Glasstreifen anlegbare Niederhalter. Der im Bereich des abzutrennenden Randstreifens anlegbare Niederhalter ist gegenüber dem anderen Niederhalter des Werkzeuges absenkbar, um den abzutrennenden Randstreifen mechanisch zu verformen. Um die Glasstreifen entlang einer Ritzlinie zu brechen und in Zuschnitte zu zerteilen ist in Transportrichtung zwischen zwei Förderbändern ein Freiraum (Spalt) vorgesehen, in dem eine Einrichtung zum Brechen entlang der Ritzlinie vorgesehen ist, die auf einer Führungsbahn quer zur Transportrichtung verfahrbar ist, um sie gegenüber den Ritzlinien in den Glasstreifen auszurichten. Ein potentieller Nachteil dieser Lösung mit einer verfahrbaren Brecheinrichtung besteht darin, dass Abschnitte der geteilten Glasplatten beim Weitertransport aufgrund Reibungsschlupf aneinander anstoßen und die Glaskanten beschädigt werden können.

Aus der US 4 049 167 A1 und aus der US 4 454 972 A sind Brechanlagen mit einer horizontalen Transporteinrichtung für Floatglas bekannt, mit denen in nur einer einheitlichen Transportrichtung ohne Quertransport und ohne Drehung der Glasplatte einerseits die beiden seitlichen Längsränder einer Glasplatte entlang von Ritzlinien mittels Brechwalzen oder - rollen und anschließend mittels einer Querabtrennung senkrecht zur Transportrichtung Traveren von der Glasplatte abgetrennt werden.

Aus der WO 2009/154 022 A1 ist eine Vorrichtung zum Abtrennen von verklebten Glassubstraten zur Herstellung von LCD-Displaypaneelen bekannt, die einen Ritzvorrichtung zum Herstellen von Ritzlinien in einer der Transportrichtung entsprechenden Längsrichtung und in einer Querrichtung senkrecht dazu, eine in Längsrichtung bewegbare Dampf-Brechstation zum Abtrennen des Substrats in der Querrichtung und eine ebenfalls in Längsrichtung bewegbare Brechstation mit Brechwalzen oder -rollen zum Abtrennen des Substrats in der Längsrichtung, sowie eine Austragvorrichtung für die abgetrennten Paneele aufweist.

Aus der WO 2015/072 488 A1 ist eine Vorrichtung zum Abtrennen der beiden seitlichen Längsränder einer dünnen Glasplatte einer Dicke ≤1mm durch Falten der Seitenränder entlang von Ritzlinien mittels eines aus Düsen ausgestoßenen Druckluftstrahls bekannt.

Aus der DE 10 2019 215 077 A1 ist ein Schneidverfahren und eine Schneideinrichtung zum oberflächlichen Ritzen von plattenförmigen Bauteilen aus Glas oder Keramik, beispielsweise Floatglasscheiben, sowie ein Verfahren zum Aufteilen solcher Bauteile aus Glas oder Keramik, vorzugsweise Floatglasscheiben oder Verbundglasscheiben, in einzelne Bauteilzuschnitte bekannt. Der Ritzvorgang wird mittels Schallemissionsanalyse überwacht, um Schneidparameter wie Schneiddruck, Verschleißgrad, Verschleißart, Zahneingriffsfrequenz und Schneidgeschwindigkeit eines Schneidrädchens zu überwachen und in Abhängigkeit von einer gewünschten Bruchkantenqualität, insbesondere einer Bruchkantenfestigkeit einzustellen.

Aufgabe der Erfindung ist die Bereitstellung einer Brechanlage für Floatglas und eines Verfahrens zum Brechen von Floatglas sowie einer mit der Brechanlage ausgestatteten Anlage zum Schneiden von Floatglas sowie eines das Brechverfahren nutzenden Verfahrens zum Schneiden von Floatglas, mit der/dem effizient und bei geringem Platzbedarf aus Floatglas Abschnitte bzw. Einzelscheiben hoher Qualität hergestellt werden können. Gemäß der Erfindung soll in einem weiteren Aspekt insbesondere die Qualität bzw. Form der Bruchkante der Abschnitte bzw. Einzelscheiben automatisiert verbessert werden.

Zur Lösung bringt die Erfindung eine Brechanlage für Floatglas mit den Merkmalen des Patentanspruches 1, ein Verfahren zum Brechen von Floatglas mit den Merkmalen des Patentanspruches 9, eine mit der Brechanlage ausgestattete Anlage zum Schneiden von Floatglas mit den Merkmalen des Patentanspruches 6, sowie ein das Brechverfahren nutzendes Verfahren zum Schneiden von Floatglas mit den Merkmalen des Patentanspruches 12 in Vorschlag. Bevorzugte Ausgestaltungen sind jeweils in den abhängigen Patentansprüchen angegeben.

Die Erfindung stellt demnach insbesondere eine Brechanlage für Floatglas bereit, umfassend:
eine erste Brechstation mit mindestens einer ersten Brecheinrichtung zum Brechen des Floatglases entlang einer zuvor auf das Floatglas aufgebrachten Ritzlinie in einer ersten Richtung X, um eine Travere des Floatglases abzutrennen,
eine zweite Brechstation mit mindestens einer zweiten Brecheinrichtung zum Brechen der Travere entlang einer zuvor auf das Floatglas aufgebrachten Ritzlinie in einer zweiten Richtung Y, die senkrecht zu der ersten Richtung X ist,
eine Transporteinrichtung zum Transportieren des Floatglases, der Travere und von Abschnitten derselben durch die Brechanlage in einer vorzugweise horizontalen Arbeitsebene in einer ersten linearen Transportrichtung T1,
wobei die zweite Brechstation in der ersten Transportrichtung T1 stromab der ersten Brechstation angeordnet ist und ausgestaltet ist, um das Brechen der Travere mittels der mindestens einen zweiten Brecheinrichtung ohne eine Drehung der Travere relativ zu der ersten Transportrichtung T1 auszuführen,
wobei vorzugsweise die mindestens eine erste Brecheinrichtung und in jedem Fall die mindestens eine zweite Brecheinrichtung in Bezug auf die Transportrichtung des Floatglases oder der Travere feststehen, und
wobei die mindestens eine erste Brecheinrichtung und/oder die mindestens eine zweite Brecheinrichtung jeweils eine an der mit der Ritzlinie versehenen Seite an das Floatglas anlegbare längliche Brechschiene oder Brechleiste und einen von der gegenüberliegenden Seite an das Floatglas anlegbaren länglichen Gegenhalter aufweist, deren relativer Abstand zum Ausführen des Brechens verkleinerbar ist, um das Floatglas an der Ritzlinie mechanisch zu verformen und den Bruch einzuleiten.

Die Erfindung stellt demnach insbesondere auch ein Verfahren zum Brechen von Floatglas bereit, umfassend:
Transportieren eines Floatglases auf einem Transportweg in einer vorzugsweise horizontalen Arbeitsebene in einer ersten linearen Transportrichtung T1,
auf dem Transportweg in der ersten Transportrichtung (T1) erstes Brechen des Floatglases entlang einer zuvor auf das Floatglas aufgebrachten Ritzlinie in einer ersten Richtung X, um eine Travere des Floatglases abzutrennen, und
auf dem Transportweg in der ersten Transportrichtung T1 zweites Brechen der Travere entlang einer zuvor auf das Floatglas aufgebrachten Ritzlinie in einer zweiten Richtung Y, die senkrecht zu der ersten Richtung X ist,
wobei das zweite Brechen in der ersten Transportrichtung T1 stromab von dem ersten Brechen und ohne eine Drehung der Travere relativ zu der ersten Transportrichtung T1 in der Arbeitsebene und mittels einer Brecheinrichtung erfolgt, die in Bezug auf die Transportrichtung der Travere feststeht.

Vorzugsweise wird bei dem Verfahren das erste Brechen des Floatglases und/oder das zweite Brechen der Travere durch eine Brecheinrichtung ausgeführt, die jeweils eine an der mit der Ritzlinie versehenen Seite an das Floatglas bzw. die Travere anlegbare längliche Brechschiene oder Brechleiste und einen von der gegenüberliegenden Seite an das Floatglas bzw. die Travere anlegbaren länglichen Gegenhalter aufweist, deren relativer Abstand zum Ausführen des Brechens verkleinerbar ist, um das Floatglas an der Ritzlinie mechanisch zu verformen und den Bruch einzuleiten.

Durch die erfindungsgemäße Ausgestaltung, dass der Transport des Floatglases, der Traveren und der Abschnitte während des Prozesses der Unterteilung in der Haupt-Transportrichtung durch die Anlage erfolgt (welche senkrecht zu der ersten oder X-Richtung ist), ohne dass die Travere (oder Abschnitte derselben) auf dem Transportweg relativ zu der Transportrichtung gedreht werden, kann der für die Drehung erforderliche Drehtisch entfallen, wodurch die Anlage vereinfacht und der Platzbedarf reduziert wird, wodurch wiederum Kosten der Anlage verringert werden.

Der reduzierte Platzbedarf ermöglicht eine kompaktere Bauweise einer Gesamtanlage zur Unterteilung auch großer Floatglas-Rohplatten in fertige Glasscheibenformate und vereinfacht somit auch die Nachrüstung bestehender Anlagen. Die einfachere Grundstruktur mit einem Durchlauf durch die Anlage in der linearen Haupt-Transportrichtung ermöglicht auch eine einfache Skalierung der Anlage in Länge und/oder Breite selbst zu sehr großen Floatglas-Rohplatten, weil eine Umlenkung der Transportrichtung oder eine Drehung der Glasplatten entfällt.

Durch das erfindungsgemäße Merkmal, dass die zweite Brechstation mit der mindestens einen zweiten Brecheinrichtung zum Brechen der Travere entlang einer zuvor auf das Floatglas aufgebrachten Ritzlinie in der zweiten Richtung (Y), die senkrecht zu der ersten Richtung (X) ist, vorgesehen ist, kann - in Verbindung mit dem Verzicht auf eine Drehung der Travere - die Unterteilung der Travere im fortgesetzten Verlauf der Haupt-Transportrichtung erfolgen, ohne dass, wie das im Stand der Technik, z.B. auch in der WO 96/22948 A1, häufig erfolgt, die Haupt-Transportrichtung um 90 Grad geändert wird, so dass die Traveren im Stand der Technik zu der zweiten Brecheinrichtung in der ersten oder X-Richtung transportiert werden müssen. Dadurch wird der Platzbedarf der Anlage auch im Vergleich zu diesem Stand der Technik, der zwar auf einen Drehtisch verzichtet, verringert.

Weil im Vergleich zum Stand der Technik die aufwendige Drehtechnik der großen Glasscheiben und die langen Transportwege bei Umlenkung der großen Glasscheiben entfallen, kann auch der Betrieb der Anlage energieeffizienter sein.

Schließlich wird durch die feststehende Anordnung der mindestens einen zweiten Brecheinrichtung in Bezug auf die Transportrichtung des Floatglases oder der Travere in der Arbeitsebene, während nur die Travere durch die Transporteinrichtung bewegt wird, stets ein Abstand zwischen den abgeteilten Abschnitten beibehalten und es kommt nicht zu einem ungewollten Aneinanderstoßen benachbarter Abschnitte bei einem Schlupf zwischen Glas und Transporteinrichtung. Zusätzlich kann die Transportgeschwindigkeit der Traveren bzw. Abschnitte beim Durchlauf durch die Anlage erhöht werden, weil die regelmäßig geringere Geschwindigkeit der bewegbaren Brecheinrichtungen, die z.B. bei der EP 0 564 758 B1 eingesetzt werden, als Begrenzung entfällt.

Vorzugsweise besitzt die zweite Brechstation mindestens zwei zweite in Bezug auf die Transportrichtung der Travere feststehende Brecheinrichtungen zum Brechen der Travere entlang von Ritzlinien in der zweiten Richtung Y aufweist, die parallel zueinander und parallel zu der ersten Transportrichtung T1 angeordnet sind, und der zweiten Brechstation ist eine weitere Transporteinrichtung zugeordnet, vorzugsweise ein kombinierter Längs-Querförderer, weiter vorzugsweise ein Riemen-Rollenförderer, um die Travere in der zweiten Brechstation selektiv in einer zweiten Transportrichtung T2, die senkrecht zu der ersten Transportrichtung T1 ist, zu bewegen/verlagern.

Die Anordnung von mehreren feststehenden Brecheinrichtungen in der zweiten Brechstation (also zum Brechen der Y-Ritzlinien) erhöht die Anzahl der Brechvorgänge bzw. Brechpositionen, die in der zweiten Brechstation ausgeführt werden können. Sofern die Brecheinrichtungen an den mit der Position der Y-Ritzlinien übereinstimmenden Positionen fluchtend angeordnet sind, können ggf. sogar mehrere Brechvorgänge gleichzeitig ausgeführt werden. Allerdings ist durch die feststehende Anordnung die Anzahl der herstellbaren Größen von Abschnitten begrenzt.

Um diesen Nachteil auszugleichen, ist vorzugsweise der zweiten Brechstation eine weitere Transporteinrichtung zugeordnet, die vorzugsweise ein kombinierter Längs-Querförderer, weiter vorzugsweise ein Riemen-Rollenförderer ist, welche/welcher zum einen den Transport in der Haupt-Transportrichtung durch die Anlage bereitstellt, welcher aber auch selektiv eine Verlagerung der Travere in der zweiten Brechstation in der zweiten Transportrichtung T2, die senkrecht zu der ersten Transportrichtung T1 ist, bewerkstelligt, um die Position der jeweiligen Y-Ritzlinien mit der feststehenden Brecheinrichtung in Ausrichtung zu bringen. Im Vergleich zum Stand der Technik, wo die Haupt-Transportrichtung der Travere um 90 Grad geändert wird, ist hierzu nur eine relativ geringe Transportdistanz innerhalb der zweiten Brechstation in der zweiten Transportrichtung erforderlich. Sofern mehrere feststehende, parallele Brecheinrichtungen in der zweiten Brechstation vorgesehen sind, kann die Transport- bzw. Verlagerungsdistanz in dieser zweiten Transportrichtung minimiert werden, indem der Transport zu der jeweils geeigneten nächstliegenden Brecheinrichtung erfolgt.

Durch die relativ geringfügige Verlagerung der Traveren in der zweiten Transportrichtung innerhalb der zweiten Brechstation wird der Platzbedarf der Anlage nicht vergrößert und die Haupt-Transportrichtung durch die Anlage kann im Prinzip beibehalten werden.

Vorzugsweise ist in der zweiten Brechstation eine weitere Brecheinrichtung für die Entfernung eines in der ersten Transportrichtung T1 linken und/oder rechten Randanschnittes der Travere vorgesehen, und/oder weist die erste Brechstation ebenfalls eine weitere Brecheinrichtung für die Entfernung eines in der ersten Transportrichtung T1 vorderen und/oder hinteren Randanschnittes des Floatglases auf.

Die weiteren Brecheinrichtungen zur Entfernung der Randstreifen der Floatglas-Rohplatte sind an sich im Stand der Technik bekannt und können ebenfalls relativ zu der Transportrichtung der Glasscheiben feststehen und sie sind typischerweise an den Außenrändern der jeweiligen Brechstation angeordnet und einem Auffangbehälter für die abgetrennten und herabfallenden Glasstreifen zugeordnet.

Vorzugsweise besitzt die Brechanlage eine dritte Brechstation mit mindestens einer dritten Brecheinrichtung zum Brechen eines zuvor abgetrennten Abschnitts der Travere entlang einer zuvor auf das Floatglas aufgebrachten Ritzlinie in der ersten Richtung X, wobei die dritte Brechstation in der ersten Transportrichtung (T1) stromab der zweiten Brechstation angeordnet ist und ausgestaltet ist, um das Brechen des Abschnitts der Travere mittels der mindestens einen dritten Brecheinrichtung ohne eine Drehung des Abschnitts der Travere relativ zu der ersten Transportrichtung (T1) auszuführen.

Die dritte Brecheinrichtung ist vorzugsweise ebenfalls relativ zu der Transportrichtung der Glasscheiben feststehend angeordnet und ist in der Arbeitsebene senkrecht zu der ersten Transportrichtung T1 orientiert. Damit können die nach dem Unterteilen der Traveren in der zweiten Brechstation erzeugten Abschnitte weiter unterteilt werden, wobei die hierfür erforderlichen Ritzlinien auch zuvor aufgebracht wurden (die Ritzlinien für die Unterteilung in der dritten Brechstation sind parallel zu der X-Richtung, erstrecken sich aber nicht notwendig über die gesamte Breite der Rohplatte und sie werden gemäß der Fig. 1a daher zur Unterscheidung auch als "Z"-Linien bezeichnet).

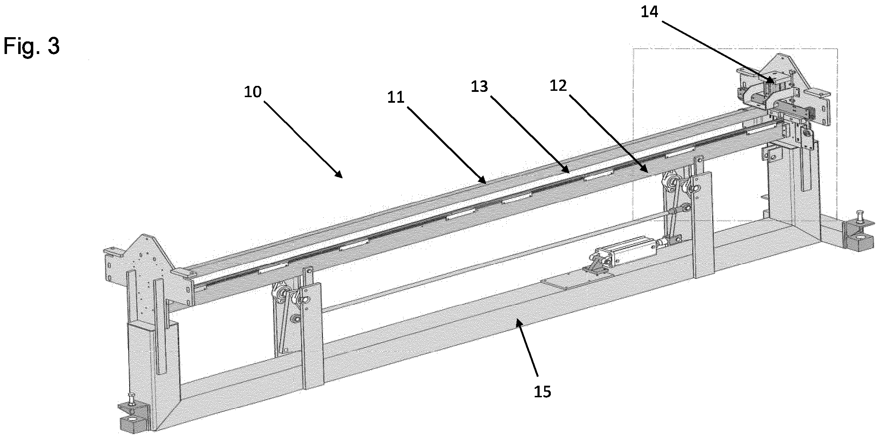

Das Vorsehen der dritten Brecheinrichtung ermöglicht die Herstellung von relativ kleinen Glasscheibenformaten bei einem einheitlichen Durchlauf durch die Anlage. Der Antrieb der Transporteinrichtung, die der dritten Brecheinrichtung zugeordnet ist und den Transport in der ersten Transportrichtung T1 durch die dritte Brechstation bewirkt, wird entsprechend gesteuert und gestoppt, so dass die Glasscheiben bzw. deren Z-Ritzlinien mit der feststehenden Brecheinrichtung ausgerichtet werden. Die dritte Brecheinrichtung kann wie die im Zusammenhang mit der Fig. 3 beschriebene erste und zweite Brecheinrichtung mit einer länglichen Brechleiste oder Brechschiene und einem länglichen Gegenhalter ausgebildet sein.

Vorzugsweise ist die Arbeitsebene der Brechanlage horizontal und ist durch einen oder mehrere Schneidtisch/Schneidtische definiert, die in der ersten Transportrichtung T1 hintereinander angeordnet sind und die jeweiligen Brechstationen bilden. Die Transporteinrichtung ist vorzugsweise durch mehrere in der ersten Transportrichtung T1 zusammenwirkende Förderer, vorzugsweise Riemen- oder Rollenförderer gebildet, die die erste Transportrichtung T1 als unidirektionale Transportrichtung durch die erste und zweite Brechstation hindurch und, sofern vorhanden, durch die dritte Brechstation hindurch definieren.

Durch die Unterteilung der Transporteinrichtung in mehrere, unabhängig betreibbare Förderer (Längs-Förderer) kann durch entsprechende Ansteuerung der Förderer in der jeweiligen Brechstation die Lage der Ritzlinien in Übereinstimmung mit der Brecheinrichtung gebracht werden. Lediglich in der zweiten Brechstation ist wie erwähnt vorzugsweise ein kombinierter Längs-Querförderer vorgesehen, dessen Querförderteil selektiv den Transport in der zweiten Transportrichtung T2 übernimmt, während der Längsförderteil mit den Förderern der anderen Brechstationen zusammenwirkt, um den Transport der Glasscheiben durch die Anlage in der ersten Transportrichtung bzw. Haupt-Transportrichtung zu bewirken.

Die Erfindung stellt sodann auch eine Anlage zum Schneiden von Floatglas bereit, umfassend:
eine Vorrichtung zum Ritzen des Floatglases in einer ersten Richtung X und in einer zweiten Richtung Y, die senkrecht zu der ersten Richtung X ist, und
eine erfindungsgemäße Brechanlage für Floatglas zum Brechen des Floatglases an den Ritzlinien, die der Vorrichtung zum Ritzen des Floatglases in der ersten Transportrichtung T1 so nachgeordnet ist, dass die Ritzlinie/Ritzlinien des Floatglases in der ersten Richtung X senkrecht zu der ersten Transportrichtung T1 angeordnet ist/sind.

Die erfindungsgemäße Anlage bietet die Möglichkeit, große Floatglas-Rohplatten in einem Durchlauf bei geringem Platzbedarf vollständig in zahlreiche fertige (Teil-) Abschnitte der gewünschten Formate zu unterteilen. Die bereits durch die Brechanlage eröffnete Reduzierung des Platzbedarfs bzw. der Transportwege innerhalb der Anlage führt auch in Kombination mit der Ritzvorrichtung in der Schneidanlage zu einer höheren Prozessstabilität im Übergang zwischen dem Ritzen und dem Brechen und in der Folge zu einem reduzierten Fehlbruchrisiko.

Vorzugsweise umfasst die Anlage eine Einrichtung zur optischen Erfassung einer Bruchkante des Floatglases an oder nach der ersten und/oder der zweiten Brechstation, und eine Einrichtung zur Auswertung des optischen Erfassungsergebnisses zur Ermittlung einer Bruchkantenform und zum rückgekoppelten Einstellen von Bearbeitungs-Prozessparametern des Ritzvorgangs, welche vorzugsweise einen oder mehrere von Schneidwerkzeugtyp, insbesondere Schneidradwinkel, Schneiddruck, Schneidgeschwindigkeit, Schneidölzufuhr umfassen, in der Vorrichtung zum Ritzen des Floatglases in Abhängigkeit von einer ermittelten Bruchkantenform.

Die Einrichtung zur optischen Erfassung der Bruchkante und die Einrichtung zur Auswertung des optischen Erfassungsergebnisses zur Ermittlung der Bruchkantenform und zum rückgekoppelten Einstellen von Bearbeitungs-Prozessparametern des Ritzvorgangs kann erfindungsgemäß in einer verallgemeinerten Anlage zum Schneiden von Floatglas mit einer Ritzeinrichtung und einer Brechanlage, die nicht notwendig die erfindungsgemäße Brechanlage sein muss, eingesetzt werden.

Das Brechen von Floatglas kann zu einer als Schrägbruch bezeichneten Bruchform führen, dessen Toleranzbereich von der jeweiligen Glasdicke und der Beschaffenheit des Basisglases abhängt. Die akzeptable Toleranz eines Schrägbruchs (sog. Über- oder Unterbruch) ist umso höher, je höher die Glasdicke ist. Die Bruchform wird maßgeblich von den Bearbeitungs-Prozessparametern des Ritzvorgangs bestimmt, die neben dem Schneidwerkzeugtyp, dabei insbesondere dem Schneidradwinkel aber auch dem Schneidraddurchmesser, der Schneidraddicke, dem Achsendurchmesser des Schneidrads, den Schneiddruck, die Schneidgeschwindigkeit und die Schneidölzufuhr umfassen.

Die optische Erfassung der Bruchkante, beispielsweise durch eine Bewegtbild- oder Einzelbild-Kamera oder andere bildgebende Verfahren oder spezifisch angepasste Sensoren wie Lichtschranken, in Verbindung mit einer automatisierten Bildanalyse (z.B. durch maschinelles Lernen/KI-Verfahren) und der Rückkoppelung des Ergebnisses der Bruchkantenerfassung, d.h. die Bestimmung der konkreten Bruchform, auf die Einstellung der relevanten Bearbeitungs-Prozessparameter des Ritzvorgangs ermöglicht eine automatische Reduzierung des Ausschusses und eine Optimierung der Qualität der erzeugten Glasscheiben, indem außerhalb der Toleranz liegende Bruchformen eines Schrägbruchs (sog. Über- oder Unterbruch) automatisch festgestellt und die maßgeblichen Parameter des Ritzvorgangs so verändert werden können, dass der Toleranzbereich bzw. ein Prozessfenster zügig eingehalten und eine gleichbleibende Produktqualität sichergestellt wird.

Vorzugsweise erfolgt das Zuordnen der optischen Erfassungsergebnisse einerseits zu den Toleranzbereichen eines Schrägbruchs und andererseits zu den Bearbeitungs-Prozessparametern des Ritzvorgangs, die zur Herstellung der der Bruchkante zugeordneten Ritzlinie des Floatglases eingestellt waren, und das Ermitteln von Änderungsgrößen der Bearbeitungs-Prozessparameter des Ritzvorgangs, um eine gewünschte Bruchkantenform zu erzielen, durch maschinelles Lernen/KI-Verfahren. Diese Verfahren eignen sich in besonderer Weise zur automatischen Optimierung von wiederholten, reproduzierbaren Abläufen mit mehreren Einflussgrößen.

Die Erfassung der Bruchform und der Bearbeitungs-Prozessparameter kann auch für Zwecke der Dokumentation der Produkteigenschaften und -qualität verwendet werden.

Im Folgenden wird ein Ausführungsbeispiel der Erfindung anhand der beigefügten Zeichnung erläutert. Darin zeigen:
Fig. 1 eine Floatglas-Rohplatte, die an X-Linien, an Y-Linien und an Z-Linien sowie an Nullschnittritzlinien im Bereich von zwei zu einer Ecke zusammenlaufenden Rändern der Rohplatte geritzt ist, um anschließend gebrochen zu werden;
Fig. 2 eine Brechanlage für Floatglas mit einer ersten, einer zweiten und einer dritten Brechstation;
Fig. 3 das Detail einer Brecheinrichtung aus der Anlage von Fig. 2;
Fig. 4 einen schematischen Vergleich von Schneidrädern mit unterschiedlichen Schneidradwinkeln in einer Teil-Querschnittdarstellung; und
Fig. 5 ein schematischer Vergleich von Bruchformen bei Floatglas.

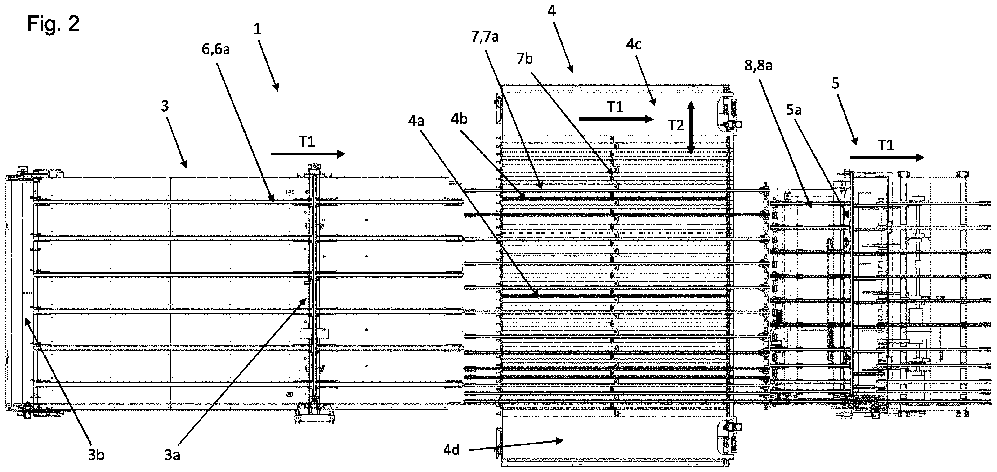

Die in Fig. 2 in der Draufsicht gezeigte Brechanlage 1 für Floatglas gemäß einer Ausführungsform der Erfindung umfasst eine erste Brechstation 3, eine zweite Brechstation 4 und eine dritte Brechstation 5, die hintereinander in einer Haupt-Transportrichtung T1 (erste Transportrichtung) für das Floatglas bzw. Abschnitte davon angeordnet sind.

Jede Brechstation besitzt mindestens eine Brecheinrichtung, um das Floatglas an zuvor in einer separaten und stromauf der Brechstation angeordneten Ritzstation auf das Floatglas 2 aufgebrachten Ritzlinien mechanisch zu biegen und zu brechen. Konkret besitzt die erste Brechstation 3 mindestens eine erste Brecheinrichtung 3a zum Brechen des Floatglases 2 entlang von zuvor auf das Floatglas 2 aufgebrachten Ritzlinien in einer ersten Richtung X, um eine oder mehrere sog. Travere(n) 2a des Floatglases 2 abzutrennen. Die Floatglas-Rohplatte ist dazu auf einem Schneidtisch 3b in einer horizontalen Arbeitsebene so platziert, dass die Richtung X senkrecht zu der Haupt-Transportrichtung T1 ist.

Zum Transport der Floatglas-Rohplatte in der Haupt-Transportrichtung T1 ist der Schneidtisch der ersten Brechstation 3 mit einem Förderer 6, vorzugsweise einem unidirektionalen Längs-Förderer 6a, vorzugsweise einem Riemen- oder Rollenförderer mit mehreren parallelen umlaufenden endlosen Transportbändern (oder Rollenanordnungen) versehen, auf denen die Glasplatte aufliegt und aufgrund Reibung bei einem Antrieb des Förderers in der Arbeitsebene in der Haupt-Transportrichtung T1 mitgenommen wird. Um die Floatglas-Rohplatte an den Ritzlinien in der X-Richtung zu brechen, wird der Transport angehalten, sobald eine Ritzlinie mit der ersten Brecheinrichtung 3a fluchtet, die hier an einer definierten Position in der rechten Hälfte des Schneidtisches angeordnet ist.

Die Brecheinrichtung steht für die Zwecke der Brechbearbeitung relativ zu der Transportrichtung fest, kann aber falls erwünscht in der Längsrichtung versetzt und an einer anderen Position festgelegt werden. Es können auch mehrere erste Brecheinrichtungen über die Länge des Schneidtisches verteilt vorgesehen sein.

Die Fig. 3 zeigt beispielhaft eine für die Zwecke der Erfindung geeignete Brecheinrichtung als isoliertes Detail der Brecheinrichtung aus der Anlage von Fig. 2. Die Brecheinrichtung besitzt einen Maschinenrahmen 15, der eine hydraulisch oder pneumatisch (über einen an einem oder an beiden axialen Enden angeordneten Hydraulik- bzw. Pneumatikzylinder 14) betätigbare längliche Brechschiene oder Brechleiste 11 und einen parallel dazu und unter Bildung eines Arbeitsspalts 13 vertikal gegenüberliegend angeordneten länglichen Gegenhalter 12 trägt. Die vertikale Position des Gegenhalters 12 ist durch einen vorzugsweise elektronisch betätigbaren Druckregler einstellbar. Eine derartige Brecheinrichtung kann typischerweise Glasplatten mit Dicken von 2 bis 12mm brechen, indem die Glasplatte durch den zunächst geöffneten Arbeitsspalt 13 geführt wird, der Transport angehalten wird, wenn die Ritzlinie mit einer definierten Arbeitsstellung relativ zu und parallel zu der Brechschiene 11 fluchtet, und dann durch hydraulische oder pneumatische Absenkung der Brechschiene 11 gegen den Gegenhalter 12 mechanisch verformt und abgebrochen wird. Die abgetrennten Abschnitte der Glasplatte werden dann auf dem Förderer in der (ersten) Transportrichtung T1 weitertransportiert und an eine in Fortsetzung der Transportrichtung stromab angeordnete zweite Brechstation 4 übergeben.

Die Brecheinrichtung zum Unterteilen der Floatglas-Rohplatte bzw. der später beschriebenen Traveren umfasst also die an der mit der Ritzlinie versehenen Seite an die Glastafel anlegbare längliche Brechschiene oder Brechleiste 11 und den von der gegenüberliegenden Seite an die Glastafel anlegbaren länglichen Gegenhalter 12, deren relativer Abstand zum Ausführen des Brechens verkleinerbar ist, um die Glasplatte an der Ritzlinie mechanisch zu verformen und den Bruch einzuleiten.

Die zweite Brechstation 4 ist ebenfalls mit mindestens einer zweiten Brecheinrichtung 4a,4b zum Brechen der Travere 2a entlang einer zuvor auf das Floatglas 2 aufgebrachten Ritzlinie in einer zweiten Richtung Y, die senkrecht zu der ersten Richtung X ist (siehe Fig. 1), versehen. Die zweite Brechstation 4 ist ausgestaltet, um das Brechen der Travere 2a mittels der mindestens einen zweiten Brecheinrichtung 4a,4b ohne eine Drehung der Travere 2a relativ zu der ersten Transportrichtung T1 auszuführen.

Dazu ist der zweiten Brechstation 4 eine weitere Transporteinrichtung zugeordnet, vorzugsweise ein kombinierter Längs-Querförderer 7, weiter vorzugsweise ein Riemen-Rollenförderer, um die Travere 2a in der zweiten Brechstation 4 in der Arbeitsebene selektiv in der ersten Transportrichtung T1 zu transportieren und bei Bedarf in einer zweiten Transportrichtung T2, die senkrecht zu der ersten Transportrichtung T1 ist, zu bewegen/verlagern. Der Längs-Querförderer 7 ist so an den Längs-Förderer 6a der ersten Brechstation angeschlossen, dass er die Traveren 2a zunächst übernimmt und diese bzw. die abgetrennten Abschnitte linear ohne vertikalen Versatz durch den Schneidtisch der zweiten Brechstation in der horizontalen Arbeitsebene weitertransportiert.

Erfindungsgemäß steht die mindestens eine zweite Brecheinrichtung 4a,4b zumindest während des Brechvorgangs in Bezug auf die Transportrichtung des Floatglases oder der Travere 2a fest und ist parallel zu der ersten Transportrichtung T2 ausgerichtet. Der grundsätzliche Aufbau und die Funktion der Brecheinrichtung bzw. der Ablauf des Brechvorgangs kann der von Fig. 3 entsprechen, die bereits im Zusammenhang mit der ersten Brechstation 3 beschrieben wurde. Vorzugsweise besitzt die zweite Brechstation 4 wie gezeigt mindestens zwei zweite in Bezug auf die Transportrichtung der Travere 2a feststehende Brecheinrichtungen 4a,4b zum Brechen der Travere 2a entlang von Ritzlinien in der zweiten Richtung Y, die parallel zueinander und parallel zu der ersten Transportrichtung T1 angeordnet sind. Die Position der Brecheinrichtungen 4a,4b innerhalb des Schneidtisches in der zweiten Richtung kann, wie im Zusammenhang mit der Fig. 3 erläutert, grundsätzlich durch einen Umbau geändert werden.

Bei dem bevorzugten Riemen-Rollenförderer als Beispiel für den kombinierten Längs-Querförderer 7 sind mehrere parallele Endlos-Transportriemen 7a für den Transport der Glasscheiben in der Haupt-Transportrichtung T1 vorgesehen und bilden so einen Teil der Transporteinrichtung durch die Anlage. Anhebbare und absenkbare Rollen oder Walzen, die jeweils um zu der Haupt-Transportrichtung parallele Achsen drehbar sind, sind zwischen den Endlos-Transportriemen in einer oder mehreren parallelen Reihen vorgesehen, um die Glasscheiben selektiv anzuheben und abzusenken und diese im angehobenen Zustand, wenn die Glasscheiben also nicht mehr in Eingriff mit den Transportriemen sind, in der zweiten Transportrichtung T2 zu bewegen und innerhalb der zweiten Brechstation mit der gewünschten Brecheinrichtung 4a,4b auszurichten.

Die zweite Brechstation 4 kann eine weitere Brecheinrichtung 4c,4d für die Entfernung eines in der ersten Transportrichtung T1 linken und/oder rechten Randanschnittes der Travere 2a aufweisen. Diese weiteren Brecheinrichtungen zur Entfernung der Randstreifen der Floatglas-Rohplatte bzw. der Traveren sind an sich im Stand der Technik bekannt und können ebenfalls relativ zu der Transportrichtung der Glasscheiben feststehen. Sie sind typischerweise an den Außenrändern der jeweiligen Brechstation (hier der zweiten Brechstation 4) angeordnet und sind einem Auffangbehälter zugeordnet, in den die abgetrennten Glasstreifen abgeworfen werden.

Auch in der ersten Brechstation 3 kann eine weitere Brecheinrichtung 3b für die Entfernung eines in der ersten Transportrichtung T1 vorderen und/oder hinteren Randanschnittes des Floatglases 2 angeordnet sein.

Die in Fig. 2 gezeigte beispielhafte Brechanlage besitzt sodann eine (optionale) dritte Brechstation 5 mit mindestens einer dritten Brecheinrichtung 5a zum Brechen eines zuvor abgetrennten Abschnitts der Travere 2a entlang einer zuvor auf das Floatglas 2 aufgebrachten Ritzlinie in der ersten Richtung X (die gemäß Fig. 1 auch als Z-Richtung bezeichnet bzw. parallel zu dieser ist), wobei die dritte Brechstation 5 in der ersten Transportrichtung T1 stromab der zweiten Brechstation 4 angeordnet ist und ausgestaltet ist, um das Brechen des Abschnitts der Travere 2a mittels der mindestens einen dritten Brecheinrichtung 5a ohne eine Drehung des Abschnitts der Travere 2a relativ zu der ersten Transportrichtung T1 auszuführen.

Die dritte Brechstation 5 ist dazu ebenfalls mit einem Schneidtisch ausgestattet. Zum Transport der Abschnitte der Traveren 2a in der Haupt-Transportrichtung T1 ist der Schneidtisch der dritten Brechstation 5 mit einem Förderer 8, vorzugsweise einem unidirektionalen Längs-Förderer 8a, vorzugsweise einem Riemen- oder Rollenförderer mit mehreren parallelen umlaufenden endlosen Transportbändern (oder Rollenanordnungen) versehen, auf denen die Glasplatte aufliegt und aufgrund Reibung bei einem Antrieb des Förderers in der Arbeitsebene in der Haupt-Transportrichtung T1 mitgenommen wird. Um die Abschnitte an den Ritzlinien in der X- bzw. Z-Richtung zu brechen, wird der Transport angehalten, sobald eine Ritzlinie mit der dritten Brecheinrichtung 5a fluchtet, die hier an einer definierten Position in der linken Hälfte des Schneidtisches angeordnet ist. Der Längs-Förderer 8 ist so an den Längs-Querförderer 7a der zweiten Brechstation 4 angeschlossen, dass er die Abschnitte der Traveren 2a zunächst übernimmt und diese linear ohne vertikalen Versatz durch den Schneidtisch der dritten Brechstation 5 in der horizontalen Arbeitsebene weitertransportiert. Stromab werden die an sich fertigen Abschnitte (Glasscheiben) an eine weitere Bearbeitungsstation übergeben oder aus der Anlage entnommen.

Gemäß vorstehender Beschreibung sind die ersten bis dritten Brechstationen 3, 4 und 5 der Brechanlage jeweils mit einem eigenen Schneidtisch und einer eigenen Transporteinrichtung für die Glasscheiben ausgestattet, die in der ersten Transportrichtung T1 linear hintereinander angeordnet sind, um die Glasscheiben zu übergeben. Die Transporteinrichtung ist hierbei durch mehrere in der ersten Transportrichtung T1 zusammenwirkende Förderer, vorzugsweise Riemen- oder Rollenförderer gebildet, die die erste Transportrichtung T1 als unidirektionale Transportrichtung durch die erste und zweite Brechstation 3, 4 hindurch und, sofern vorhanden, durch die dritte Brechstation 5 hindurch definieren. Allerdings können die Funktionen mehrerer Brechstationen auf einem gemeinsamen Schneidtisch mit einer durchgehenden Transporteinrichtung kombiniert sein.

Die Erfindung gemäß vorstehender Beschreibung ist im Rahmen einer Brechanlage verwirklicht, die als eigenständige Einheit verwirklicht sein kann, oder aber in Verbindung mit einer an sich bekannten Vorrichtung zum Ritzen von Floatglas 2 in den jeweiligen Richtungen (X, Y, Z) zur Bildung einer Anlage zum Schneiden von Floatglas kombiniert sein kann, indem die Brechanlage 1 für Floatglas der Vorrichtung zum Ritzen des Floatglases 2 in der ersten Transportrichtung T1 so nachgeordnet ist, dass die Ritzlinie/Ritzlinien des Floatglases 2 in der ersten Richtung X senkrecht zu der ersten Transportrichtung T1 (durch die Brechanlage hindurch) angeordnet ist/sind.

Bei einer solchen Anlage zum Schneiden von Floatglas, die die Ritzvorrichtung beinhaltet, schlägt die Erfindung gemäß einem weiteren Aspekt eine Einrichtung zur optischen Erfassung einer Bruchkante des Floatglases an oder nach der ersten Brechstation 3 und/oder der zweiten Brechstation 4, und eine Einrichtung zur Auswertung des optischen Erfassungsergebnisses zur Ermittlung einer Bruchkantenform und zum rückgekoppelten Einstellen von Bearbeitungs-Prozessparametern des Ritzvorgangs in der Vorrichtung zum Ritzen des Floatglases in Abhängigkeit von einer ermittelten Bruchkantenform vor. Die durch die Rückkoppelung einzustellenden bzw. durch Anwendung eines Korrekturwerts zu modifizierenden Bearbeitungs-Prozessparametern des Ritzvorgangs umfassen vorzugsweise einen oder mehrere von Schneidwerkzeugtyp, diesbezüglich insbesondere Schneidradwinkel (aber auch Schneidraddurchmesser, Schneidradbreite, Schneidradmaterial), Schneiddruck, Schneidgeschwindigkeit und/oder Schneidölzufuhr, die einen nicht zu vernachlässigenden Einfluss auf die Erzeugung der Spannungen im Glasmaterial und damit auf die Form der Bruchkante haben.

Während einige Parameter wie Schneiddruck, Schneidgeschwindigkeit und/oder Schneidölzufuhr durch Eingriff in die Steuerung der Anlage einfach und in der Regel "On-line" beeinflusst werden können, ist für den Wechsel eines Schneidwerkzeugtyps ggf. ein manueller Eingriff erforderlich, wenn keine automatisch ansteuerbare Werkzeugwechselvorrichtung vorgesehen ist.

Die optische Erfassung der Bruchkante kann beispielsweise durch eine Bewegtbild- oder Einzelbild-Kamera (ein CCD-Sensor bzw. "charge-coupled device", der ein lichtempfindliches elektronisches Bauelement ist, das auf dem inneren Photoeffekt beruht) oder andere bildgebende Verfahren oder spezifisch angepasste Sensoren wie Lichtschranken, in Verbindung mit einer automatisierten Bildanalyse und Bilderkennung (z.B. durch maschinelles Lernen/KI-Verfahren) erfolgen.

Die Fig. 5 zeigt einen schematischen Vergleich von möglichen Bruchformen bei Floatglas und die nach der Norm SN EN 572-8 zugeordneten Maximalwerte (t) in mm von Schrägbruchtoleranzen in Abhängigkeit von der Glasdicke.

Die Einrichtung zur Auswertung des optischen Erfassungsergebnisses ist erfindungsgemäß konfiguriert, um die optischen Erfassungsergebnisse den Bearbeitungs-Prozessparametern des Ritzvorgangs bei der Herstellung der der erfassten Bruchkante zugeordneten Ritzlinie in der Vorrichtung zum Ritzen des Floatglases zuzuordnen und durch maschinelles Lernen/KI-Verfahren Änderungsgrößen der Bearbeitungs-Prozessparameter des Ritzvorgangs zu ermitteln, um eine gewünschte Bruchkantenform zu erzielen. Nachdem bei diesem Prozess im industriellen Maßstab eine große Anzahl von Brechvorgängen berücksichtigt werden kann, können beispielsweise durch überwachtes maschinelles Lernen und anschließendes sog. "Deep-Learning" die Korrekturparameter auch einer Anzahl der genannten Parameter und komplexer Zusammenhänge bestimmt werden, um auf dieser Grundlage eine automatische Reduzierung des Ausschusses und eine Optimierung der Qualität der erzeugten Glasscheiben zu erreichen, indem außerhalb der Toleranz liegende Bruchformen eines Schrägbruchs (sog. Über- oder Unterbruch) automatisch festgestellt und die maßgeblichen ausgewählten Parameter des Ritzvorgangs so verändert werden, dass der Toleranzbereich bzw. ein Prozessfenster zügig eingehalten und eine gleichbleibende Produktqualität sichergestellt wird.

## Patentansprüche

1. Eine Brechanlage (1) für Floatglas, umfassend:
eine erste Brechstation (3) mit mindestens einer ersten Brecheinrichtung (3a) zum Brechen des Floatglases (2) entlang einer zuvor auf das Floatglas (2) aufgebrachten Ritzlinie in einer ersten Richtung (X), um eine Travere (2a) des Floatglases (2) abzutrennen,
eine zweite Brechstation (4) mit mindestens einer zweiten Brecheinrichtung (4a,4b) zum Brechen der Travere (2a) entlang einer zuvor auf das Floatglas (2) aufgebrachten Ritzlinie in einer zweiten Richtung (Y), die senkrecht zu der ersten Richtung (X) ist,
eine Transporteinrichtung zum Transportieren des Floatglases (2), der Travere (2a) und von Abschnitten derselben durch die Brechanlage (1) in einer vorzugweise horizontalen Arbeitsebene in einer ersten linearen Transportrichtung (T1),
wobei die zweite Brechstation (4) in der ersten Transportrichtung (T1) stromab der ersten Brechstation (3) angeordnet ist und ausgestaltet ist, um das Brechen der Travere (2a) mittels der mindestens einen zweiten Brecheinrichtung (4a,4b) ohne eine Drehung der Travere (2a) relativ zu der ersten Transportrichtung (T1) auszuführen,
wobei vorzugsweise die mindestens eine erste Brecheinrichtung (3a) und in jedem Fall die mindestens eine zweite Brecheinrichtung (4a,4b) in Bezug auf die Transportrichtung des Floatglases oder der Travere (2a) feststehen, und
wobei die mindestens eine erste Brecheinrichtung (3a) und/oder die mindestens eine zweite Brecheinrichtung (4a,4b) jeweils eine an der mit der Ritzlinie versehenen Seite an das Floatglas (2) anlegbare längliche Brechschiene oder Brechleiste (11) und einen von der gegenüberliegenden Seite an das Floatglas (2) anlegbaren länglichen Gegenhalter (12) aufweist, deren relativer Abstand zum Ausführen des Brechens verkleinerbar ist, um das Floatglas (2) an der Ritzlinie mechanisch zu verformen und den Bruch einzuleiten.

2. Die Brechanlage (1) für Floatglas gemäß Anspruch 1, wobei
die zweite Brechstation (4) mindestens zwei zweite in Bezug auf die Transportrichtung der Travere (2a) feststehende Brecheinrichtungen (4a,4b) zum Brechen der Travere (2a) entlang von Ritzlinien in der zweiten Richtung (Y) aufweist, die parallel zueinander und parallel zu der ersten Transportrichtung (T1) angeordnet sind, und
der zweiten Brechstation (4) eine weitere Transporteinrichtung zugeordnet ist, vorzugsweise ein kombinierter Längs-Querförderer (7), weiter vorzugsweise ein Riemen-Rollenförderer, um die Travere (2a) in der zweiten Brechstation (4) selektiv in einer zweiten Transportrichtung (T2), die senkrecht zu der ersten Transportrichtung (T1) ist, zu bewegen/verlagern.

3. Die Brechanlage (1) für Floatglas gemäß Anspruch 1 oder 2, wobei die zweite Brechstation (4) eine weitere Brecheinrichtung (4c,4d) für die Entfernung eines in der ersten Transportrichtung (T1) linken und/oder rechten Randanschnittes der Travere (2a) aufweist, und/oder
wobei die erste Brechstation (3) eine weitere Brecheinrichtung (3b) für die Entfernung eines in der ersten Transportrichtung (T1) vorderen und/oder hinteren Randanschnittes des Floatglases (2) aufweist.

4. Die Brechanlage (1) für Floatglas gemäß einem der Ansprüche 1 bis 3, mit einer dritten Brechstation (5) mit mindestens einer dritten Brecheinrichtung (5a) zum Brechen eines zuvor abgetrennten Abschnitts der Travere (2a) entlang einer zuvor auf das Floatglas (2) aufgebrachten Ritzlinie in der ersten Richtung (X), wobei die dritte Brechstation (5) in der ersten Transportrichtung (T1) stromab der zweiten Brechstation (4) angeordnet ist und ausgestaltet ist, um das Brechen des Abschnitts der Travere (2a) mittels der mindestens einen dritten Brecheinrichtung (5a) ohne eine Drehung des Abschnitts der Travere (2a) relativ zu der ersten Transportrichtung (T1) auszuführen.

5. Die Brechanlage (1) für Floatglas gemäß einem der Ansprüche 1 bis 4, wobei die Arbeitsebene horizontal ist und durch einen oder mehrere Schneidtisch/Schneidtische definiert ist, die in der ersten Transportrichtung (T1) hintereinander angeordnet sind, und die Transporteinrichtung durch mehrere in der ersten Transportrichtung (T1) zusammenwirkende Förderer (6;7;8), vorzugsweise Riemen- oder Rollenförderer gebildet ist, die die erste Transportrichtung (T1) als unidirektionale Transportrichtung durch die erste und zweite Brechstation (3;4) hindurch und, sofern vorhanden, durch die dritte Brechstation (5) hindurch definieren.

6. Eine Anlage zum Schneiden von Floatglas, umfassend:
eine Vorrichtung zum Ritzen des Floatglases (2) in einer ersten Richtung (X) und in einer zweiten Richtung (Y), die senkrecht zu der ersten Richtung (X) ist, und
eine Brechanlage (1) für Floatglas gemäß einem der Ansprüche 1 bis 5 zum Brechen des Floatglases (2) an den Ritzlinien, die der Vorrichtung zum Ritzen des Floatglases (2) in der ersten Transportrichtung (T1) so nachgeordnet ist, dass die Ritzlinie/Ritzlinien des Floatglases (2) in der ersten Richtung (X) senkrecht zu der ersten Transportrichtung (T1) angeordnet ist/sind.

7. Die Anlage zum Schneiden von Floatglas gemäß Anspruch 6, umfassend
eine Einrichtung zur optischen Erfassung einer Bruchkante des Floatglases an oder nach der ersten und/oder der zweiten Brechstation (3;4), und
eine Einrichtung zur Auswertung des optischen Erfassungsergebnisses zur Ermittlung einer Bruchkantenform und zum rückgekoppelten Einstellen von Bearbeitungs-Prozessparametern des Ritzvorgangs, welche vorzugsweise einen oder mehrere von Schneidwerkzeugtyp, insbesondere Schneidradwinkel, Schneiddruck, Schneidgeschwindigkeit, Schneidölzufuhr umfassen, in der Vorrichtung zum Ritzen des Floatglases in Abhängigkeit von einer ermittelten Bruchkantenform.

8. Die Anlage zum Schneiden von Floatglas gemäß Anspruch 7, wobei
die Einrichtung zur Auswertung des optischen Erfassungsergebnisses konfiguriert ist, um die optischen Erfassungsergebnisse den Bearbeitungs-Prozessparametern des Ritzvorgangs bei der Herstellung der der erfassten Bruchkante zugeordneten Ritzlinie in der Vorrichtung zum Ritzen des Floatglases zuzuordnen und durch maschinelles Lernen/KI-Verfahren Änderungsgrößen der Bearbeitungs-Prozessparameter des Ritzvorgangs zu ermitteln, um eine gewünschte Bruchkantenform zu erzielen.

9. Ein Verfahren zum Brechen von Floatglas, umfassend:
Transportieren eines Floatglases (2) auf einem Transportweg in einer vorzugsweise horizontalen Arbeitsebene in einer ersten linearen Transportrichtung (T1),
auf dem Transportweg in der ersten Transportrichtung (T1) erstes Brechen des Floatglases (2) entlang einer zuvor auf das Floatglas (2) aufgebrachten Ritzlinie in einer ersten Richtung (X), um eine Travere (2a) des Floatglases (2) abzutrennen, und
auf dem Transportweg in der ersten Transportrichtung (T1) zweites Brechen der Travere (2a) entlang einer zuvor auf das Floatglas (2) aufgebrachten Ritzlinie in einer zweiten Richtung (Y), die senkrecht zu der ersten Richtung (X) ist,
wobei das zweite Brechen in der ersten Transportrichtung (T1) stromab von dem ersten Brechen und ohne eine Drehung der Travere (2a) relativ zu der ersten Transportrichtung (T1) in der Arbeitsebene und mittels einer Brecheinrichtung (4a,4b) erfolgt, die in Bezug auf die Transportrichtung der Travere (2a) feststeht.

10. Das Verfahren zum Brechen von Floatglas gemäß Anspruch 9, wobei die Travere (2a) nach dem ersten Brechen und vor dem zweiten Brechen in einer zweiten Transportrichtung (T2), die senkrecht zu der ersten Transportrichtung (T1) ist, bewegt/verlagert wird.

11. Das Verfahren zum Brechen von Floatglas gemäß Anspruch 9 oder 10, wobei das erste Brechen des Floatglases (2) und/oder das zweite Brechen der Travere (2a) durch eine Brecheinrichtung (3a,4a,4b) ausgeführt wird, die jeweils eine an der mit der Ritzlinie versehenen Seite an das Floatglas (2) bzw. die Travere (2a) anlegbare längliche Brechschiene oder Brechleiste (11) und einen von der gegenüberliegenden Seite an das Floatglas (2) bzw. die Travere (2a) anlegbaren länglichen Gegenhalter (12) aufweist, deren relativer Abstand zum Ausführen des Brechens verkleinerbar ist, um das Floatglas (2) an der Ritzlinie mechanisch zu verformen und den Bruch einzuleiten.

12. Ein Verfahren zum Schneiden von Floatglas, umfassend:
Ritzen eines Floatglases (2) in einer ersten Richtung (X) und in einer zweiten Richtung (Y), die senkrecht zu der ersten Richtung (X) ist, und
Brechen des Floatglases mit dem Verfahren nach Anspruch 9, 10 oder 11, wobei die Ritzlinie/Ritzlinien des Floatglases (2) in der ersten Richtung (X) senkrecht zu der ersten Transportrichtung (T1) angeordnet wird/werden.

13. Das Verfahren zum Schneiden von Floatglas gemäß Anspruch 12, umfassend
optisches Erfassen einer Bruchkante des Floatglases (2), und
Auswerten des optischen Erfassungsergebnisses zur Ermittlung einer Bruchkantenform und rückgekoppeltes Einstellen von Bearbeitungs-Prozessparametern des Ritzvorgangs, welche vorzugsweise einen oder mehrere von Schneidwerkzeugtyp, insbesondere Schneidradwinkel, Schneiddruck, Schneidgeschwindigkeit, Schneidölzufuhr umfassen, des Floatglases (2) in Abhängigkeit von der ermittelten Bruchkantenform.

14. Das Verfahren zum Schneiden von Floatglas gemäß Anspruch 13, umfassend
Zuordnen der optischen Erfassungsergebnisse zu den Bearbeitungs-Prozessparametern des Ritzvorgangs zur Herstellung der der Bruchkante zugeordneten Ritzlinie des Floatglases und Ermitteln, durch maschinelles Lernen/KI-Verfahren, von Änderungsgrößen der Bearbeitungs-Prozessparameter des Ritzvorgangs, um eine gewünschte Bruchkantenform zu erzielen.
